# EUROPEAN PATENT APPLICATION

(11) **EP 1 162 588 A2**
(43) Date of publication of application: **12.12.2001**
(21) Application number: 01113969.8
(22) Date of filing: 08.06.2001
(51) Int. Cl.: G09B 21/04

(54) **Braille labelling system**

(30) Priority: 08.06.2000 CA 2309329
(71) Applicant: Promotion Nord-Sud Inc., Laval, Quebec H7M 2J5 (CA)
(72) Inventor: Campeau, Richard, Beloeil, Quebec J3G 3N2 (CA)
(74) Representative: Wasmeier, Alfons, Dipl.-Ing.

(57) **Abstract**

A system for conveying information regarding a pharmaceutical product to sight impaired people wherein there is a label applied to the container for the pharmaceuticals, the label having tactile imaging material with raised information thereon, the raised information providing dosage and time information concerning the pharmaceutical.

## Description

### FIELD OF THE INVENTION

The present invention relates to labels and more particularly, relates to labels for use by sight impaired or blind persons and to systems for conveying information concerning pharmaceutical and like products.

### BACKGROUND OF THE INVENTION

Sight impaired or blind people face many challenges and obstacles as they make their way in the every day world which is designed for people with normal vision. Although there has been some recent movement to providing more information to sight impaired or blind people, such efforts have generally been limited to public places and in particular, to the use of braille in elevators and the like. To date, most consumer products do not contain any information for the sight impaired or blind person.

Apart from the inconvenience for the sight impaired or blind person, many safety issues arise. One of the prime areas of concern is that of medication. As many sight impaired or blind people are elderly, the problem is particularly sever since elderly people consume the most medication.

The medication consumed by elderly people is generally substantial and includes many different prescriptions covering different disease indications or conditions. It is not unknown for ten to twenty different pharmaceutical products to be consumed by an elderly person.

Naturally, one of the problems associated with the use of so many different medications, and particularly with the contra indications between various medications, is to provide sufficient information to the sight impaired or blind persons such that they will properly use the medications. Generally, it has been left to the individual consumer to arrange for a system to identify the different medications. This is undesirable and as a result, many people have suffered due to taking of the wrong medication at the wrong time.

### SUMMARY OF THE INVENTION

It is an object of the present invention to provide a system for conveying information regarding pharmaceuticals and like products to sight impaired people.

It is a further object of the present invention to provide a method for the identification of pharmaceutical products for sight impaired people.

In one embodiment of the present invention, there is provided a system for conveying information regarding a pharmaceutical product and like products to sight impaired people, the system comprising a container for pharmaceuticals, and a label for identifying said pharmaceutical product, said label having time indicating means and dosage indicating means thereon, each of said indicating means comprising a tactile imaging material, the material having raised information conveying indicia thereon providing the information.

In a further embodiment of the present invention, there is provided a label for attachment to a container for a pharmaceutical product, the label being formed from a tactile imaging material, the material having raised information conveying indicia thereon providing dosage indicating means and time indicating means, the label having means for attachment to the container for a pharmaceutical product.

In greater detail, the tactile imaging material allows for printing of raised images. The materials are capable of being imprinted with tactile images on one side of the material without indentations on the other side. Such materials are known in the art.

Particularly in the case of pharmaceuticals, the labels may include graphic images which are used to indicate the dosage and time for taking the medication. Such graphics, alone or in combination with conventional braille wording, have been found to be suitable for providing the necessary information. In one particular embodiment, apart from the use of raised word indicia in a desired language to permit tactile reading by sight impaired persons, the label may also contain a time indicating means in the form of a clock. Similarly, dosage indicating means may comprise raised indicia showing the number of capsules or pills which are to be taken. Preferably, the label includes means for attachment to the container. Such means may include adhesive means for securing the label to the exterior of the container. It will naturally be understood that the label could be placed within the container.

Preferably, the labels would be printed as rolls of the same and they would be applied to the container when the pills are dispensed - i.e. at the pharmacy.

Additional information which can be included on the label may, for example, indicate whether the pharmaceutical product is to be taken with food and/or a liquid.

### BRIEF DESCRIPTION OF THE DRAWINGS

Having thus generally described the invention, reference will be made to the accompanying drawings illustrating an embodiment thereof, in which:
Figure 1 is a plan view of a first type of warning label;
Figure 2 is a plan view of a second type of warning label; and
Figures 3 to 10 are plan views of information labels suitable for use on medication.

### DESCRIPTION OF THE PREFERRED EMBODIMENTS

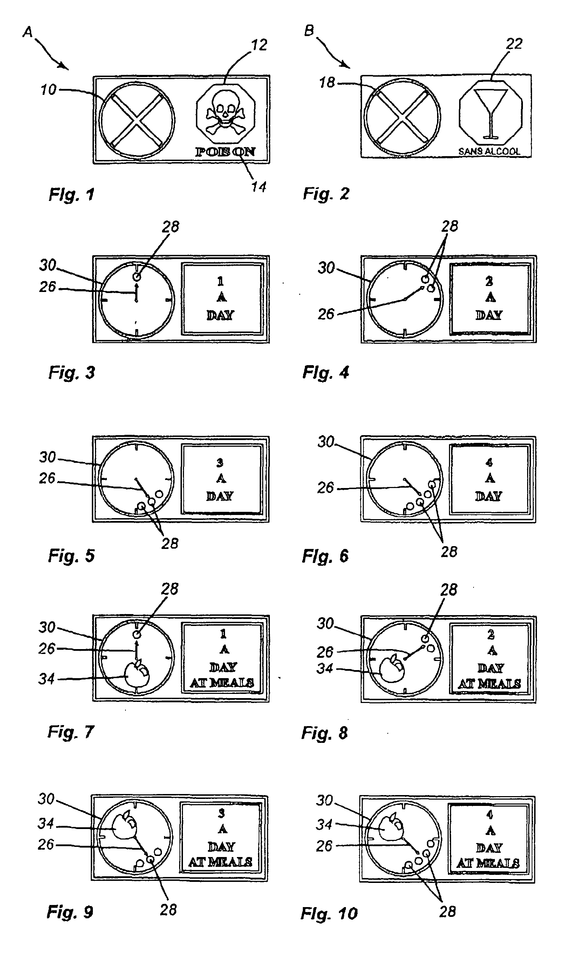

Referring to the drawings in greater detail and by reference characters thereto, there is shown in Figure 1 a first warning label generally designated by reference character A.

Warning label A may be used to identify potentially poisonous substances and as such, has a raised cross in a circle 10. Alternatively, or in conjunction therewith, one may use a skull and crossbones sign 12. In addition, for sighted people, the word poison 14 may also appear.

Warning label B in Figure 2 may be used to advise that the medication is not to be taken with any alcohol. To this end, there is provided a raised cross in a circle 18 along with a raised glass 20 in an octagonal outline 22.

Figure 3 illustrates a label which may be applied to medication. In this arrangement, there is provided an arrow 26 pointing to a single raised dot 28 positioned at the twelve o'clock position of a circular clock outline 30. This indicates, as shown by the label, that a single dose is to be taken once a day.

In Figure 4, a modified version is shown wherein arrow 26 points to a pair of raised dots 28 at approximately the 2 o'clock position. This would indicate that the medication is to be taken twice daily. Similarly, Figures 5 and 6 illustrate similar embodiments wherein the designation is that the medicine is to be taken three times per day and four times per day respectively.

A variation on the label is shown in Figures 7 through 10 which are similar to Figures 3 to 6. However, in this instance, there is an insignia showing that the medication is to be taken with food. As shown in these figures, an item of food such as an apple 34 may be used to so designate.

The labels may conveniently be supplied as a roll of the same where each label is self adhesive. The raised indicia which are used may be from tactile imaging paper which is known in the art. Many other art tactile imaging materials of cloth, plastic and paper may also be utilized.

It will be understood that the above described embodiment is for purposes of illustration only and that changes and modifications may be made thereto without departing from the spirit and scope of the invention.

## Claims

1. A system for conveying information regarding a pharmaceutical product and like products to sight impaired people, the system comprising:
a container for pharmaceuticals; and
a label for identifying said pharmaceutical product, said label having time indicating means and dosage indicating means thereon, each of said indicating means comprising a tactile imaging material, said material having raised information conveying indicia thereon providing said information.

2. The system of Claim 1 wherein said label further includes means for attachment to said container.

3. The system of Claim 1 wherein said time indicating means comprises a representation of a clock, said clock having a hand pointing to a time.

4. The system of Claim 1 wherein said dosage indicating means comprises one raised indicia, said raised indicia indicating that a single portion is to be taken.

5. A label for attachment to a container for a pharmaceutical product, the label being formed from a tactile imaging material, said material having raised information conveying indicia thereon providing dosage indicating means and time indicating means, said label having means for attachment to a container for pharmaceuticals.

6. The label of Claim 5 wherein said time indicating means comprises a representation of a clock, said clock having a hand pointing to a time.

7. The label of Claim 5 wherein said dosage indicating means comprises at least one raised indicia, said raised indicia indicating that a single portion is to be taken.

8. The label of Claim 5 wherein said label further contains raised indicia indicating whether said medicant is to be taken with food.

9. The label of Claim 5 further including lettering thereon, said lettering conveying information identical to that conveyed by the raised indicia.
